# FASCICULE DE BREVET EUROPEEN

(11) **EP 1 719 673 B1**
(45) Date de publication et mention de la délivrance du brevet: **11.06.2008**
(21) Numéro de dépôt: 06300357.8
(22) Date de dépôt: 12.04.2006
(51) Int. Cl.: B60S 1/38

(54) **Balai d'essuie-glace pour véhicule automobile**
Scheibenwischerblatt für Kraftfahrzeuge
Windscreen-wiper blade for vehicles

(30) Priorité: 03.05.2005 FR 0504490
(43) Date de publication de la demande: 08.11.2006
(73) Titulaire: RENAULT S.A.S., 92100 Boulogne Billancourt (FR)
(72) Inventeur: Laporte-Galaa, Philippe, 75014, PARIS (FR); Francisco, Paulo, 78470, St Remy les Chevreuses (FR); Verneuil, Pascal, 78460, Chevreuse (FR); Martin, Hervé, 91190, Gif sur Yvette (FR); Monteil, Michel, 78870, Bailly (FR)

(56) Documents cités:
- DE-A1- 2 309 063
- DE-A1- 3 307 188
- DE-B- 1 043 110
- FR-A- 2 755 926
- US-A- 4 592 110
- US-A1- 2002 050 018
- US-B1- 6 763 546

## Description

L'invention concerne un balai d'essuie-glace pour véhicule automobile à capacité d'essuyage améliorée, notamment pour pare-brise à forte variation de galbe. Plus particulièrement, l'invention concerne un balai permettant d'améliorer l'essuyage des pare-brise panoramiques, sans toutefois s'y limiter.

Un essuie-glace à balai est généralement formé d'un bras d'essuie-glace monté mobile sur un véhicule automobile et d'un balai formé d'une monture supportant une lame d'essuyage, la monture étant pourvue d'une attache apte à coopérer avec le bras d'essuie-glace afin de fixer la monture au bras.

Deux types de balais sont utilisés actuellement : les balais à palonniers et les balais plats.

Le balai à palonniers présente une monture reliée au bras du balai d'essuie-glace au moyen de palonniers. Ces palonniers sont généralement métalliques et disposés au dessus de la monture, du côté opposé à la lame d'essuyage. Les palonniers présentent l'avantage de permettre une répartition homogène des forces appliquées par le bras sur sensiblement toute la longueur du balai.

Le balai plat présente une monture formée d'un profil en plastique souple dans lequel est placée une vertèbre s'étendant sur toute la longueur de la monture et adaptée à la courbure de la surface à essuyer. Une lame d'essuyage souple est enfilée dans le profil et maintenue dans ce dernier par des griffes. La courbure de la vertèbre permet de respecter une répartition de pression correcte tout le long de la surface de contact avec le pare-brise. Ce type de balai est plus esthétique et plus efficace à haute vitesse qu'un balai à palonniers car il présente une prise aérodynamique plus faible.

Un balai d'essuie-glace selon le préambule de la revendication 1 est décrit par le document FR 2755926.

Cependant, pour les pare-brise présentant de fortes variations de galbe, tels que les pare-brise panoramiques, ces deux types de balais ne permettent pas d'assurer le maintien d'une pression uniforme, constante et suffisante sur toute la longueur de la lame tout au long de la course de déplacement du bras. En effet, le balai ou la lame n'est pas à la fois suffisamment souple et rigide pour maintenir un contact suffisant entre la lame et le pare-brise tout en appliquant une pression suffisante et constante.

L'invention vise à pallier ces inconvénients en proposant un balai d'essuie-glace présentant une capacité d'essuyage améliorée de surfaces à fortes variations de galbe.

A cet effet, l'objet de l'invention concerne un balai d'essuie-glace pour véhicule automobile comportant une monture supportant une lame d'essuyage d'une surface, la monture comprenant une première lame souple supportant la lame d'essuyage, et une deuxième lame souple pré-courbée les extrémités de la première lame souple étant solidaires de la face concave de la deuxième lame souple, à proximité de ses extrémités, caractérisé en ce que la première lame souple est pré-courbée présentant une courbure prédéterminée et la deuxième lame souple présente une courbure plus prononcée que celle de la première lame souple, les concavités des deux lames sont dirigées dans une même direction. La forme pré-courbée de la première lame souple prédispose le balai à se plaquer suffisamment contre la surface à essuyer en cas de variation locale de galbe de manière à assurer une répartition de pression uniforme sur toute la longueur de la lame d'essuyage. La deuxième lame souple pré-courbée permet d'assurer la transmission de l'effort nécessaire au plaquage de la lame d'essuyage contre la surface à essuyer lors de variations locales du galbe de la surface. Cette deuxième lame souple joue ainsi le rôle d'un palonnier pour transmettre l'effort de plaquage issu d'un bras d'essuie-glace aux deux extrémités du balai d'essuie-glace.

Par rapport aux balais à palonniers classiques, le balai selon l'invention présente l'avantage d'une prise aérodynamique moins importante et d'un nombre réduit de pièces. Le balai selon l'invention permet une meilleure répartition de la pression qu'un balai plat classique lors de fortes variations de galbe de la surface à essuyer.

Avantageusement, la monture est pourvue d'au moins deux ressorts placés entre les première et deuxième lames souples, symétriquement par rapport au plan médian transversal du balai. De tels ressorts assurent le maintien de la courbure de la lame d'essuyage en la "pré-courbant". Cette variante permet d'améliorer l'efficacité de commande de la deuxième lame souple et l'aptitude de la lame d'essuyage à se plaquer en permanence sur la surface à essuyer, tout en maintenant une pression de contact uniforme sur toute la longueur de la lame d'essuyage lors des variations de galbe.

Avantageusement, la monture étant pourvue d'une attache de fixation destinée à coopérer avec un bras d'essuie-glace monté mobile sur le véhicule automobile, l'attache de fixation est montée sur la deuxième lame souple de manière à permettre une rotation de la deuxième lame souple par rapport au bras d'essuie-glace autour d'un axe sensiblement perpendiculaire au plan de la lame d'essuyage. Une telle rotation permet d'améliorer l'efficacité de commande de la deuxième lame souple ainsi que l'aptitude de la lame d'essuyage à se plaquer en permanence sur la surface à essuyer en maintenant une pression de contact uniforme sur toute sa longueur.

Avantageusement, la première lame présente une courbure de forme sensiblement elliptique à la place de la courbure de forme similaire à un boomerang des balais plats classiques, afin d'améliorer le plaquage de la lame d'essuyage contre la surface à essuyer.

La qualité d'essuyage d'un essuie-glace est fonction de l'angle d'essuyage formé entre la tangente à la surface à essuyer au niveau de la zone de contact de la lame d'essuyage et de la surface, et le plan de symétrie du profil de la lame d'essuyage. Afin d'obtenir une qualité d'essuyage optimale, l'angle d'essuyage doit être idéalement d'environ 45°. Les balais classiques plats ou à palonniers ne permettent pas de contrôler la variation de l'angle d'essuyage sur toute la longueur de la lame. En effet, l'angle entre la lame d'essuyage et la surface à essuyer ayant tendance à varier lors de la course de déplacement du balai en raison de ces variations de galbe, un angle d'essuyage correct ne peut être maintenu lors des variations de galbe de la surface.

Ce problème est résolu par l'invention en prévoyant, à chaque extrémité de la deuxième lame souple, un patin de guidage présentant deux points d'appui symétriques par rapport à la lame d'essuyage, ces points d'appui étant destinés à venir en contact avec la surface à essuyer de manière à maintenir la lame d'essuyage dans une plage d'inclinaison donnée par rapport à la surface à essuyer.

Dans une variante, les patins sont montés articulés sur la deuxième lame souple autour d'un axe de rotation sensiblement perpendiculaire à la direction de déplacement du balai sur la surface à essuyer et parallèle à la direction longitudinale de la lame d'essuyage.

Dans une autre variante, dans laquelle la monture est pourvue d'une attache de fixation destinée à coopérer avec un bras d'essuie-glace monté mobile sur le véhicule automobile, l'attache de fixation est montée sur la deuxième lame souple de manière à permettre une rotation de la deuxième lame souple par rapport au bras d'essuie-glace autour d'un axe sensiblement perpendiculaire à la direction de déplacement du balai sur la surface à essuyer et parallèle à la direction longitudinale de la lame d'essuyage.

Dans ces deux variantes, une telle rotation de l'ensemble des deux lames souples par rapport à la surface permet de faciliter ou d'améliorer l'aptitude des patins du balai à palper en permanence correctement la surface à essuyer afin de maintenir l'angle d'essuyage dans une plage optimale, sur toute la longueur de la lame d'essuyage.

Dans un mode de réalisation particulier, les points d'appui de chaque patin sont formés par des bombages.

Dans un autre mode de réalisation particulier, les points d'appui de chaque patin sont formés par des galets ou rouleaux dont l'axe de rotation est sensiblement parallèle à la direction longitudinale de la lame d'essuyage. Ces galets ou rouleaux roulent ainsi sur la surface à essuyer lors du déplacement du balai.

De préférence, les patins sont réalisés dans une matière apte à limiter les frottements avec la surface à essuyer afin de ne pas ralentir ni gêner la course du balai.

L'invention est maintenant décrite en référence aux dessins annexés, non limitatifs, dans lesquels :
- la figure 1 est une représentation en perspective d'un balai selon l'invention ;
- la figure 2 est une vue en coupe transversale suivant la ligne A-A de la figure 1 ;
- la figure 3 est une vue en coupe transversale du patin d'une autre variante d'un balai selon l'invention ;
- la figure 4 est une vue de côté d'un autre mode de réalisation d'un balai selon l'invention ;
- la figure 5 est une vue en coupe transversale d'une variante de réalisation d'un balai selon l'invention.

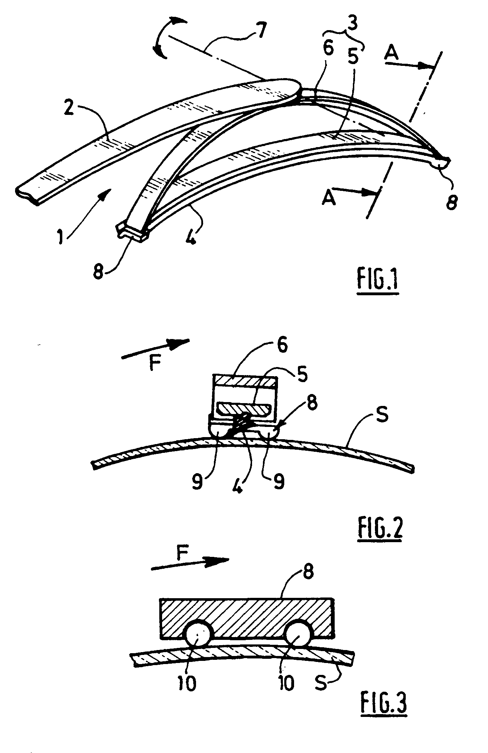

La figure 1 représente un balai d'essuie-glace 1 selon l'invention supporté par un bras d'essuie-glace 2 destiné à être monté mobile sur le véhicule automobile.

Le balai d'essuie-glace 1 est formé d'une monture 3 supportant une lame d'essuyage 4, par exemple en caoutchouc. La monture 3 comprend deux lames souples pré-courbées 5 et 6. Ces lames souples sont par exemple formées d'un profil en matière plastique souple dans lequel est noyé une vertèbre métallique présentant une courbure prédéterminée, tel que dans les balais plats classiques.

La première lame souple 5 supporte une lame d'essuyage 4 de conception classique, cette dernière étant, par exemple, enfilée dans le profil en matière plastique souple et maintenue dans ce dernier par des griffes. La deuxième lame souple 6 présente une courbure plus prononcée que la première lame souple 5, tel que visible sur la figure. Les extrémités de la première lame souple 5 sont solidaires de la face concave de la deuxième lame souple 6, à proximité de ses extrémités, les concavités des deux lames étant dirigées dans une même direction, et plus précisément dans la direction du pare-brise.

Une attache de fixation, non représentée sur les figures, relie la monture 3, et plus précisément la deuxième lame souple 6 du côté de sa face convexe, au bras d'essuie-glace 2. De préférence, cette attache permet une rotation de la monture autour d'un axe 7 sensiblement perpendiculaire au plan de la lame d'essuyage.

Afin de contrôler l'angle d'essuyage formé entre la lame d'essuyage et la tangente à la surface à essuyer S, les extrémités de la deuxième lame souple 6 sont pourvues de patins de guidage 8. Chaque patin 8 présente deux points d'appui symétriques par rapport à la lame d'essuyage 4 et situés sur une ligne sensiblement perpendiculaire à la direction longitudinale de la lame d'essuyage, tel que visible sur la figure 2. Ces points d'appui sont destinés à venir en contact avec la surface à essuyer S de manière à maintenir la lame d'essuyage 4 de la première lame souple dans une plage d'inclinaison donnée par rapport à la surface à essuyer. De préférence cette plage est centrée sur un angle de 45° ± 10°.

Dans l'exemple représenté figure 2, les points d'appui sont formés de deux bombages 9. Dans l'exemple représenté figure 3, ces points d'appui sont des galets ou rouleaux 10 qui roulent sur la surface à essuyer lors du déplacement du balai. L'axe de ces galets ou rouleaux s'étend sensiblement perpendiculairement à la direction longitudinale de la lame d'essuyage. Sur ces figures, la flèche F indique le sens de déplacement du balai.

Les patins 8 sont de préférence réalisés dans une matière limitant les frottements avec la surface S.

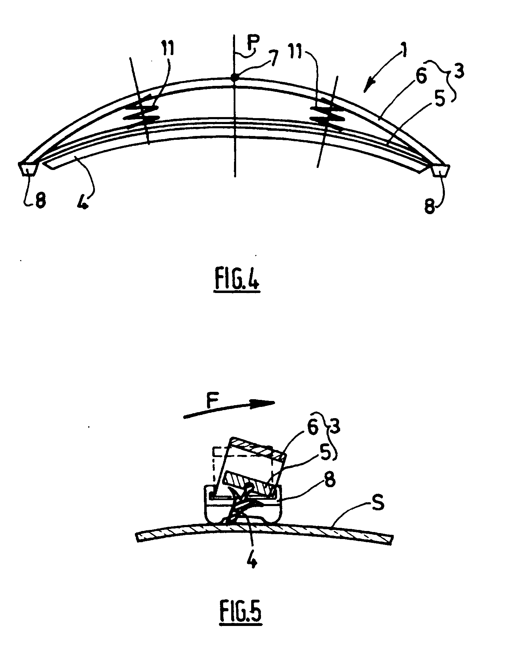

Dans la variante représentée sur la figure 4, la monture 3 est pourvue de deux ressorts 11 placés entre les première 5 et deuxième 6 lames souples. Ces ressorts sont placés de manière symétrique par rapport au plan médian transversal P du balai. Ces ressorts permettent de pré-courber la première lame souple 5. Un nombre plus important de ressorts peut être prévu, pourvu que leur agencement conserve une symétrie par rapport au plan P.

Dans la variante représentée figure 5, les patins 8 sont montés articulés sur la deuxième lame souple 6 autour d'un axe de rotation (non représenté) sensiblement perpendiculaire à la direction de déplacement F du balai sur la surface S à essuyer et sensiblement parallèle à la direction longitudinale de la lame d'essuyage 4. Sur cette figure, deux positions de la monture 3 par rapport à un patin 8 sont représentées.

Il est possible de prévoir une rotation limitée des patins par rapport à la monture, par exemple par contact de l'extrémité de la deuxième lame souple 6 avec la face supérieure du patin 8 (figure 5).

Cette rotation peut être combinée ou non avec une rotation de la monture 3 par rapport au bras 2 autour d'un axe sensiblement perpendiculaire à la direction de déplacement du balai sur la surface à essuyer et sensiblement parallèle à la direction longitudinale de la lame d'essuyage. Cette rotation est de préférence réalisée grâce à l'attache de fixation.

## Revendications

1. Balai d'essuie-glace (1) pour véhicule automobile comportant une monture (3) supportant une lame d'essuyage (4) d'une surface (S), la monture comprenant une première lame souple supportant la lame d'essuyage, et une deuxième lame souple pré-courbée (6), les extrémités de la première lame souple étant solidaires de la face concave de la deuxième lame souple, à proximité de ses extrémités, **caractérisé en ce que** la première lame souple est pré-courbée (5) présentant une courbure prédéterminée et la deuxième lame souple présente une courbure plus prononcée que celle de la première lame souple les concavités des deux lames sont dirigées dans une même direction.

2. Balai d'essuie-glace selon la revendication 1, **caractérisé en ce que** la monture est pourvue d'au moins deux ressorts (11) placés entre les première et deuxième lames souples, symétriquement par rapport au plan médian transversal (P) du balai.

3. Balai d'essuie-glace selon la revendication 1 ou 2, dans lequel la monture est pourvue d'une attache de fixation destinée à coopérer avec un bras d'essuie-glace monté mobile sur le véhicule automobile, **caractérisé en ce que** l'attache de fixation est montée sur la deuxième lame souple (6) de manière à permettre une rotation de la deuxième lame souple par rapport au bras d'essuie-glace autour d'un axe (7) sensiblement perpendiculaire au plan de la lame d'essuyage.

4. Balai d'essuie-glace selon l'une des revendications 1 à 3, **caractérisé en ce que** la première lame (5) présente une courbure de forme sensiblement elliptique.

5. Balai d'essuie-glace selon l'une des revendications 1 à 4, **caractérisé en ce que** chaque extrémité de la deuxième lame souple (6) est pourvue d'un patin de guidage (8) présentant deux points d'appui symétriques par rapport à la lame d'essuyage (4), ces points d'appui étant destinés à venir en contact avec la surface à essuyer (S) de manière à maintenir la lame d'essuyage dans une plage d'inclinaison donnée par rapport à la surface à essuyer.

6. Balai d'essuie-glace selon la revendication 5, **caractérisé en ce que** les patins (8) sont montés articulés sur la deuxième lame souple autour d'un axe de rotation sensiblement perpendiculaire à la direction de déplacement du balai sur la surface à essuyer et parallèle à la direction longitudinale de la lame d'essuyage.

7. Balai d'essuie-glace selon la revendication 5 ou 6, dans lequel la monture est pourvue d'une attache de fixation destinée à coopérer avec un bras d'essuie-glace monté mobile sur le véhicule automobile, **caractérisé en ce que** l'attache de fixation est montée sur la deuxième lame souple de manière à permettre une rotation de la deuxième lame souple par rapport au bras d'essuie-glace autour d'un axe sensiblement perpendiculaire à la direction de déplacement du balai sur la surface à essuyer et parallèle à la direction longitudinale de la lame d'essuyage.

8. Balai d'essuie-glace selon l'une des revendications 5 à 7. **caractérisé en ce que** les points d'appui de chaque patin sont formés par des bombages (9).

9. Balai d'essuie-glace selon l'une des revendications 5 à 7, **caractérisé en ce que** les points d'appui de chaque patin sont formés par des galets ou rouleaux (10) dont l'axe de rotation est sensiblement parallèle à la direction longitudinale de la lame d'essuyage.

10. Balai d'essuie-glace selon l'une des revendications 5 à 9, **caractérisé en ce que** les patins sont réalisés dans une matière apte à limiter les frottements avec la surface à essuyer.

## Claims

1. Motor vehicle windscreen wiper blade (1) comprising a fixture (3) supporting a wiper blade rubber (4) for wiping a surface (S), the fixture comprising a flexible first strip supporting the blade rubber, and a pre-curved flexible second strip (6), the ends of the flexible first strip being secured to the concave face of the flexible second strip, near its ends, **characterized in that** the flexible first strip is pre-curved (5) with a predetermined curvature and the flexible second strip has a curvature that is more pronounced than that of the flexible first strip, the concavities of the two strips facing in the same direction.

2. Windscreen wiper blade according to Claim 1, **characterized in that** the fixture is provided with at least two springs (11) positioned between the flexible first and second strips, symmetrically with respect to the transverse mid plane (P) of the blade.

3. Windscreen wiper blade according to Claim 1 or 2, in which the fixture is provided with an attachment fixing intended to collaborate with a windscreen wiper arm mounted such that it can move on the motor vehicle, **characterized in that** the attachment fixing is mounted on the flexible second strip (6) in such a way as to allow the flexible second strip to rotate with respect to the windscreen wiper arm about an axis (7) substantially perpendicular to the plane of the wiper blade rubber.

4. Windscreen wiper blade according to one of Claims 1 to 3, **characterized in that** the first strip (5) has a curvature of.substantially elliptical shape.

5. Windscreen wiper blade according to one of Claims 1 to 4, **characterized in that** each end of the flexible second strip (6) is provided with a guide shoe (8) having two bearing points that are symmetric with respect to the wiper blade rubber (4), the bearing points being intended to come into contact with the surface (S) that is to be wiped in such a way as to keep the wiper blade rubber in a given range of angle of inclination relative to the surface that is to be wiped.

6. Windscreen wiper blade according to Claim 5, **characterized in that** the shoes (8) are mounted articulated on the flexible second strip about an axis of rotation substantially perpendicular to the direction in which the blade travels over the surface that is to be wiped and parallel to the longitudinal direction of the wiper blade rubber.

7. Windscreen wiper blade according to Claim 5 or 6, in which the fixture is provided with an attachment fixing intended to collaborate with a windscreen wiper arm mounted such that it can move on the motor vehicle, **characterized in that** the attachment fixing is mounted on the flexible second strip in such a way as to allow the flexible second strip to rotate with respect to the windscreen wiper arm about an axis substantially perpendicular to the direction of travel of the blade over the surface that is to be wiped and parallel to the longitudinal direction of the wiper blade rubber.

8. Windscreen wiper blade according to one of Claims 5 to 7, **characterized in that** the bearing points of each shoe are formed by bulges (9).

9. Windscreen wiper blade according to one of Claims 5 to 7, **characterized in that** the bearing points of each shoe are formed by rollers or rolls (10) the axis of rotation of which is substantially parallel to the longitudinal direction of the wiper blade rubber.

10. Windscreen wiper blade according to one of Claims 5 to 9, **characterized in that** the shoes are made of a material able to limit friction against the surface that is to be wiped.

## Patentansprüche

1. Scheibenwischerblatt (1) für ein Kraftfahrzeug, das eine Halterung (3) aufweist, die einen Wischgummi (4) für eine Fläche (S) trägt, wobei die Halterung eine erste biegsame Lamelle (5), die den Wischgummi trägt, und eine zweite, vorgekrümmte biegsame Lamelle (6) aufweist, wobei die Enden der ersten biegsamen Lamelle fest mit der konkaven Seite der zweiten biegsamen Lamelle in der Nähe ihrer Enden verbunden sind, **dadurch gekennzeichnet, dass** die erste biegsame Lamelle (5) vorgekrümmt ist und eine vorbestimmte Krümmung aufweist und die zweite biegsame Lamelle eine stärkere Krümmung als die erste biegsame Lamelle aufweist, wobei die Hohlflächen der zwei Lamellen in die gleiche Richtung weisen.

2. Scheibenwischerblatt nach Anspruch 1, **dadurch gekennzeichnet, dass** die Halterung mit mindestens zwei Federn (11) versehen ist, die zwischen der ersten und der zweiten biegsamen Lamelle symmetrisch bezüglich der medianen Querebene (P) des Blatts angeordnet sind.

3. Scheibenwischerblatt nach Anspruch 1 oder 2, bei dem die Halterung mit einer Befestigungsklammer versehen ist, die dazu bestimmt ist, mit einem Scheibenwischerarm zusammenzuwirken, der beweglich auf dem Kraftfahrzeug montiert ist, **dadurch gekennzeichnet, dass** die Befestigungsklammer auf die zweite biegsame Lamelle (6) derart montiert ist, dass eine Drehung der zweiten biegsamen Lamelle bezüglich des Scheibenwischerarms um eine Achse (7) im Wesentlichen lotrecht zur Ebene des Wischgummis ermöglicht wird.

4. Scheibenwischerblatt nach einem der Ansprüche 1 bis 3, **dadurch gekennzeichnet, dass** die erste Lamelle (5) eine im Wesentlichen elliptische Krümmung aufweist.

5. Scheibenwischerblatt nach einem der Ansprüche 1 bis 4, **dadurch gekennzeichnet, dass** jedes Ende der zweiten biegsamen Lamelle (6) mit einem Gleitschuh (8) versehen ist, der zwei bezüglich des Wischgummis (4) symmetrische Auflagepunkte aufweist, wobei diese Auflagepunkte dazu bestimmt sind, mit der zu wischenden Fläche (S) so in Kontakt zu kommen, dass der Wischgummi in einem gegebenen Neigungsbereich bezüglich der zu wischenden Fläche gehalten wird.

6. Scheibenwischerblatt nach Anspruch 5, **dadurch gekennzeichnet, dass** die Gleitschuhe (8) auf die zweite biegsame Lamelle um eine Drehachse im Wesentlichen lotrecht zur Bewegungsrichtung des Blatts auf der zu wischenden Fläche und parallel zur Längsrichtung des Wischgummis gelenkig montiert sind.

7. Scheibenwischerblatt nach Anspruch 5 oder 6, bei dem die Halterung mit einer Befestigungsklammer versehen ist, die dazu bestimmt ist, mit einem Scheibenwischerarm zusammenzuwirken, der beweglich auf dem Kraftfahrzeug montiert ist, **dadurch gekennzeichnet, dass** die Befestigungsklammer so auf die zweite biegsame Lamelle montiert ist, dass eine Drehung der zweiten biegsamen Lamelle bezüglich des Scheibenwischerarms um eine Achse im Wesentlichen lotrecht zur Bewegungsrichtung des Blatts auf der zu wischenden Fläche und parallel zur Längsrichtung des Wischgummis ermöglicht wird.

8. Scheibenwischerblatt nach einem der Ansprüche 5 bis 7, **dadurch gekennzeichnet, dass** die Auflagepunkte jedes Gleitschuhs von Wölbungen (9) gebildet werden.

9. Scheibenwischerblatt nach einem der Ansprüche 5 bis 7, **dadurch gekennzeichnet, dass** die Auflagepunkte jedes Gleitschuhs von Laufrollen oder Rollen (10) geformt werden, deren Drehachse im Wesentlichen parallel zur Längsrichtung des Wischgummis ist.

10. Scheibenwischerblatt nach einem der Ansprüche 5 bis 9, **dadurch gekennzeichnet, dass** die Gleitschuhe aus einem Material hergestellt werden, das die Reibungen mit der zu wischenden Fläche begrenzen kann.
